# EUROPEAN PATENT SPECIFICATION

(11) **EP 1 832 786 B1**
(45) Date of publication and mention of the grant of the patent: **23.01.2008**
(21) Application number: 06425148.1
(22) Date of filing: 06.03.2006
(51) Int. Cl.: F16H 63/30, F16H 63/32

(54) **Gear shift fork**
Getriebeschaltgabel
Fourchette de sélection d'une boîte de vitesses

(43) Date of publication of application: 12.09.2007
(73) Proprietor: C.R.F. Società Consortile per Azioni, 10043 Orbassano (Torino) (IT)
(72) Inventor: Garabello, Marco, 10043 Orbassano (Torino) (IT); Pastorello, Valter, 10135 Torino (IT)
(74) Representative: Rondano, Davide

(56) References cited:
- DE-A1- 3 243 494
- DE-A1- 10 032 163
- DE-A1- 19 919 271
- FR-A- 2 762 659
- GB-A- 2 136 517
- US-A- 5 950 492

## Description

The present invention relates to a gear shift fork for a gearbox with discrete gear ratios for a motor vehicle, as defined in the preamble of claim 1.

More particularly, the invention relates to a gear shift fork comprising a support portion intended to be slidably mounted on a stationary rod, a pair of prongs which extend from the support portion and form at their distal ends respective finger portions adapted to act on a sliding coupling sleeve of the gearbox, and an actuating nose by means of which the fork is caused to slide along the stationary rod for engaging the desired gear.

A gear shift fork of the above-mentioned type is known for instance from GB-A-2 136 517.

It is the object of the invention to provide a gear shift fork for a motor-vehicle gearbox with discrete gear ratios which can be manufactured at low cost, which can be used for actuating all the sliding coupling sleeves of a manual gearbox as well as all the sliding coupling sleeves of the robotized version and of the double-clutch version which can be derived from the same manual gearbox, which allows to minimize the axial size of a set of two forks arranged on the same rod, which allows to meet the prescribed dimension and geometric tolerances without the need of special or high-precision operations, which ensures the required mechanical strength and surface hardness in the areas subject to stresses in operation, and which offers a wide flexibility of use.

This and other objects are fully achieved according to the invention by virtue of a gear shift fork for motor-vehicle gearbox with discrete gear ratios for a having the characteristics defined in independent claim 1.

Further advantageous characteristics of the invention are specified in the dependent claims.

The characteristics and the advantages of the invention will become apparent from the following detailed description, given purely by way of non-limiting example with reference to the appended drawings, in which:
Figure 1 is a perspective view which shows a shift fork according to a first preferred embodiment of the invention;
Figure 2 is a view similar to the one of Figure 1, in which the fork is shown without actuating nose;
Figure 3 is a perspective view which shows an example of arrangement of four shift forks of the type shown in Figure 1, suitable for both a hand-operated gearbox and a robotized gearbox derived therefrom;
Figure 4 is a perspective view which shows an example of arrangement of four shift forks of the type shown in Figure 1, suitable for both a double-clutch gearbox and a robotized gearbox derived therefrom;
Figure 5 is a perspective view which shows a shift fork according to a further preferred embodiment of the invention; and
Figure 6 is a view similar to the one of Figure 5, in which the fork is shown without actuating nose.

In the following description and claims the term "longitudinal" is used to indicate a direction parallel to the axis of the shafts of the gearbox, that is, a direction parallel to the stationary rods on which the gear shift forks are slidably mounted, whereas the term "transverse" is used to indicate any direction perpendicular to the above-mentioned longitudinal direction.

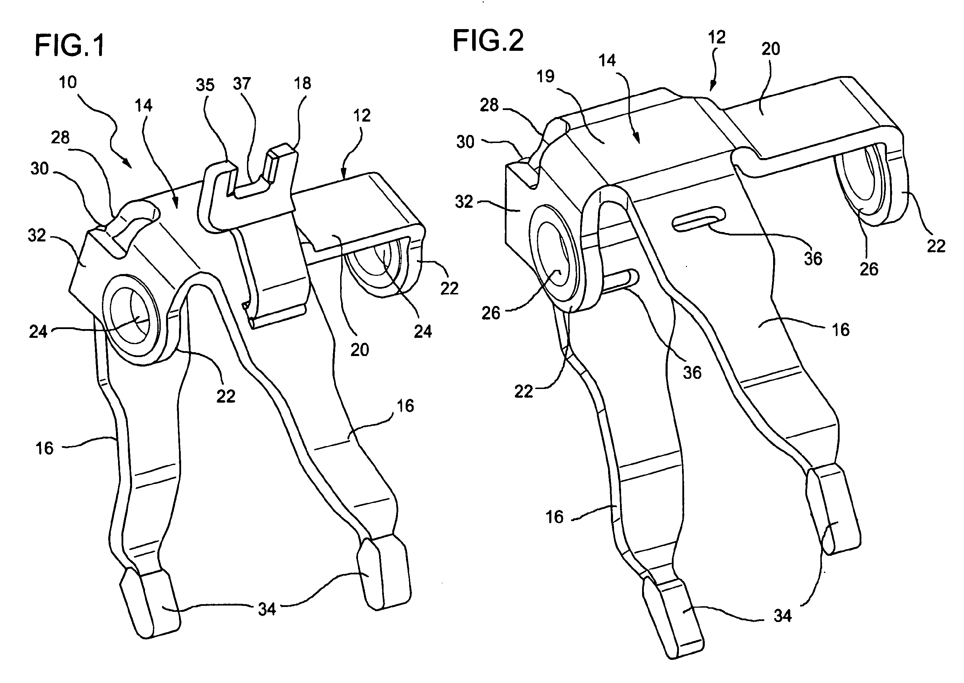

With reference first to Figures 1 and 2, a gear shift fork for a motor-vehicle gearbox with discrete gear ratios is generally indicated 10 and basically comprises a sheet-metal body 12, which according to a first preferred embodiment of the invention forms integrally a support portion 14 and a pair of prongs 16 projecting from opposite sides of the support portion 14, and an actuating nose 18 which is formed as a separate component from the sheet-metal body 12 and securely connected thereto.

The support portion 14 includes a central plate portion 19, which in the condition in which it is mounted on the respective stationary rod (not shown in Figures 1 and 2) lies in plane parallel to the axis of the rod and which preferably has a rectangular shape elongated in the longitudinal direction, and a pair of ears 22 which are arranged at right angles to the central plate portion 19. The ears 22 have respective coaxial holes 24 defining seats for guiding the sliding movement of the fork 10 along the rod. Preferably, as provided for in the embodiment shown in Figures 1 and 2, one of the two ears 22 is disposed at a greater distance from the prongs 16 than the other ear. In this connection, the support portion 14 also includes an appendage 20 which extends longitudinally from the central plate portion 19 and forms at its opposite end on eof the two ears 22. In other words, the support portion 14 is disposed in a non-symmetric position with respect to a plane of symmetry of the two prongs 16 perpendicular to the axis of the stationary rod. According to a variant of embodiment, not shown, also the other ear 22 could be formed at the end of a second appendage extending from the central plate portion on the opposite side to the first appendage 20.

The holes 24 formed in the ears 22 are advantageously provided with respective antifriction and wearproof bushes 26. The bushes 26 are preferably produced by plastics overmoulding so as to meet the required dimensional and geometric tolerances without the need of performing additional machining operations on the body 12.

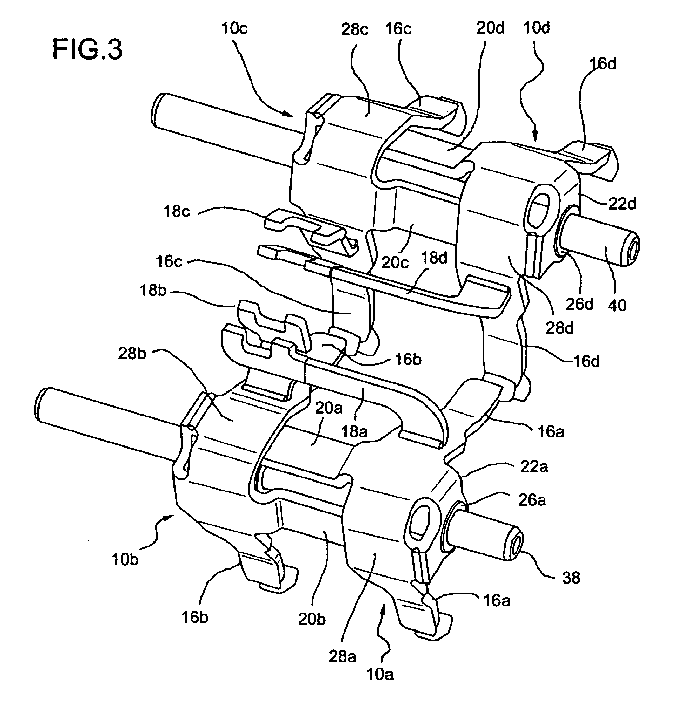

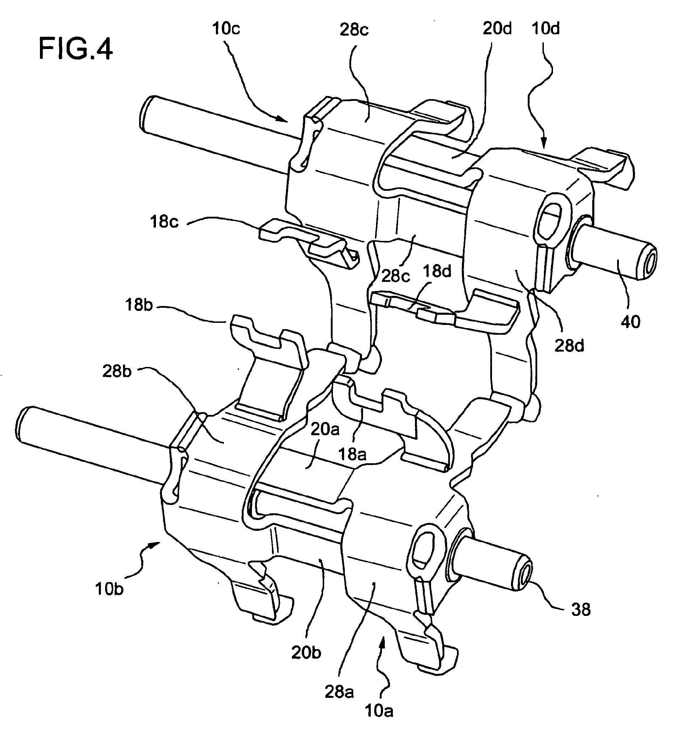

The prongs 16 extend transversely from the central plate portion 19, the one directly from one of the two longitudinal sides thereof and the other from a bridge-like portion 28 (which can be better seen in Figures 3 and 4) bent with respect to the central plate portion 19. In order to stiffen the support portion 14 of the body 12, the bridge-like portion 28 is welded by means of a weld bead 30 to a tab 32 extending laterally from one of the two ears 22.

The two prongs 16 are made as plate-like elongated elements, which extend in length on a transverse plane, that is, perpendicularly to the direction along which the fork slides, and in width along a parallel direction top the direction along which the fork slides, so as to have a high bending stiffness and hence to limit the deformations brought about by the actuation forces. The width of the prongs 16 reduces progressively from the proximal ends thereof (that is, from the ends facing the support portion 14) to distal ends thereof (that is, the ends opposite to the support portion 14). These latter have a finger-like configuration suitable for acting on a sliding coupling sleeve (not shown) arranged to engage either one or two gears. The finger-like ends of the prongs 16 are advantageously provided with an antifriction plastics coating 34, preferably made by overmoulding.

In their proximal portions, the prongs 16 have respective slots 36 (Figure 2), one of which is used for the fitting of the actuating nose 18. The two slots 36 are formed in symmetric positions relative to the finger-like ends of the prongs 16, thereby allowing the actuating nose 18 to be fitted in either one of the slots depending on the orientation of the fork 10. Advantageously, the actuating nose 18 is provided with an antifriction plastics coating 35, made by overmoulding, in the nose portion surrounding a recess 37 intended for engaging a special control member (not shown), such as for example a finger-like member carried by the lever of the control shaft of the gearbox.

Due to its particular arrangement, the body of the body can be easily manufactured as a single piece by blanking and bending and can therefore be produced at a low cost.

Moreover, as will be better understood in view of the following part of the description, all the forks of the manual gearbox, as well as of the double-clutch gearbox or of the robotized gearbox derived therefrom, share the same body and differ from each other only in the actuating nose. This enables to further reduce the cost of the fork and make its manufacturing method easier.

Another advantage is given by the fact that the support portion is arranged asymmetrically relative to a plane of symmetry of the two prongs perpendicular to the axis of the stationary rod and is configured so as to enable a set of two partially overlapped forks to be mounted on the same stationary rod. In this way, even though a proper support on the stationary rod, that is, an adequate distance between the two support ears, is maintained, it is possible to greatly reduce the axial size of the set of two forks with respect of the side-to-side arrangement of the forks according to the

### prior art.

Referring now to Figures 3 and 4, two examples of arrangement of the shift forks for a manual gearbox and for a double-clutch gearbox, respectively, will be described.

Figure 3 illustrates an example of arrangement of the shift forks which can be used both in a manual gearbox having six forward gears and one rearward gear and in the robotized gearbox derived therefrom. In the illustrated example four shift forks, indicated 10a, 10b, 10c and 10d, are provided, which are arranged in sets of two forks on a pair of stationary rods 38 and 40 parallel to the axes of the input shaft and of the outer shafts of the gearbox (not shown). More in detail, a first shift fork 10a for the first and second gears and a second shift fork 10b for the fifth and sixth gears are slidably arranged on the rod 38, whereas a third shift fork 10c for the third and fourth gears and a fourth shift fork 10d for the rear gear are slidably arranged on the rod 40. The parts and components associated to the four forks are indicated by the same reference numerals as those used in Figures 1 and 2, with the addition of the letter a, b, c or d depending on those parts or components belonging or being associated to the fork 10a, 10b, 10c or 10d, respectively.

As can be immediately noted, the bodies 12a-12d of the forks 10a-10d are identical to one another. The only difference between the various forks is given by the actuating noses 18a-18d. Since this arrangement is associated to a single-clutch gearbox, either manual or robotized, the actuating noses 18a-18d are arranged on a single transverse shift plane. Moreover, the forks are conveniently mounted in pairs on the same rod in a mirror-like manner, that is, with the prongs 16a-16d arranged on longitudinally opposite sides and with the appendages pointing to longitudinally facing sides. In this way, the appendage 20a-20d of a fork is arranged under the bridge-like portion 28a-28b of the other fork and can thus slide relative thereto. It is therefore possible to limit the axial size of the sets of forks without the need of reducing the distance between the guide seats on the rod. The invention thus provides an optimal compromise between the opposite requirements for limitation of the axial size and for resistance against the tipping and jamming of the forks during actuation.

Figure 4 illustrates on the other hand an example of arrangement of the shift forks which can be used both in a double-clutch gearbox having six forward gears and one rearward gear and in a robotized gearbox derived therefrom. As in the example of Figure 3, also in this case four shift forks 10a, 10b, 10c and 10d, arranged in sets of two forks on a pair of stationary rods 38 and 40, are provided. More in detail, a first fork 10a for the first and fifth gears and a second fork 10b for the sixth gear are slidably arranged on the rod 38, while a third fork 10c for the second and fourth gears and a fourth fork 10d for the third and rear gears are slidably arranged on the rod 40. Unlike the arrangement illustrated in Figure 3, the actuating noses are arranged on two different transverse shift planes, namely on a first plane associated to the even gears (actuating noses 18b and 18c) and a second plane associated to the odd gears and to the rear gear (actuating noses 18a and 18d). In particular, only the noses of the second plane are different from those used in the manual gearbox, whereas those of the first plane remain identical to those used in the manual gearbox or in a possible robotized gearbox derived therefrom.

As far as the partially overlapping arrangement of the sets of two forks is concerned, the same considerations apply as those exposed before with reference to Figure 3.

It is however clear that the forks might also be arranged singularly, rather than in sets of two forks. Moreover, the forks might be all arranged, either singularly or in sets of two forks, on one stationary rod or on several stationary rods.

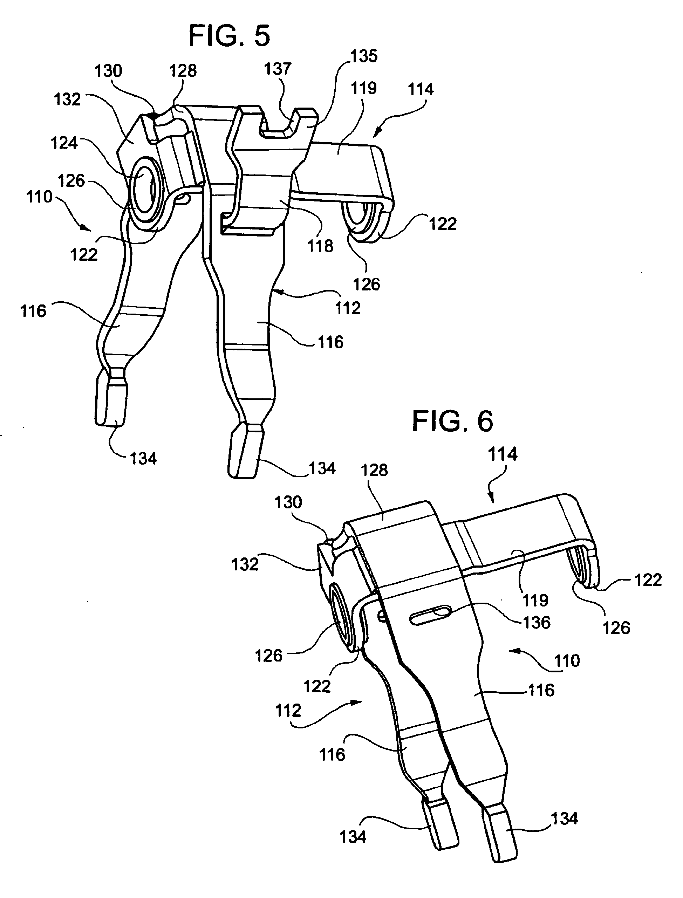

Finally, a further preferred embodiment of a shift fork according to the invention is shown in Figures 5 and 6, where parts and elements identical or corresponding to those of Figures 1 and 2 have been given the same reference numerals, increased by 100.

With reference to Figures 5 and 6, a gear shift fork 110 for a motor-vehicle gearbox with discrete gear ratios differs from the first embodiment described above substantially only in that the body of the fork is made in this case in two separate pieces, instead of a single piece. The body of the shift fork 110, now indicated 112, comprises in fact a first sheet metal piece forming a support portion 114 and a second sheet metal piece forming a pair of prongs 116, firmly secured to one another, for example by welding. Moreover, the shift fork 110 comprises also in this case an actuating nose 118 (shown in Figure 5 only) inserted and fixed in one of the two slots 136 symmetrically disposed relative to a finger-like end of the prongs 116.

The support portion 114 includes a central plate portion 119, having preferably a rectangular shape elongated in the longitudinal direction and laying, in the mounted condition on the respective stationary rod (not shown), in a plane parallel to the axis of the rod, and a pair of ears 122 arranged at a right angle to the central plate portion 119. The ears 122 have respective coaxial holes 124 defining guide seats for the sliding movement of the fork 110 along the rod.

A bridge-like portion 128, which is integrally formed by the second sheet metal piece and is welded by means of a welding bead 130 to a tab 132 extending laterally from one of the two ears 122 in order to stiffen the support portion 114 of the body 112, extends between the two prongs 116.

Also in this case one of the two ears 122 is arranged farther from the prongs 116 than the other ear, that is, the support portion 114 is not symmetrically arranged relative to a plane of symmetry of the prongs 116 perpendicular to the axis of the stationary rod. It is therefore possible to mount on the same stationary rod a set of two forks arranged so as to partially overlap, as shown in Figures 3 and 4.

As far as the provision of overmoulded antifriction bushes in the holes 124 of the ears 122, the configuration of the prongs 116 and the provision of an overmoulded antifriction coating on the actuating nose 118, the same considerations as those exposed above with reference to the first embodiment illustrated in Figures 1 and 2 apply.

Clearly, also this second embodiment offers all the advantages listed above in connection with the first embodiment. Moreover, since the support portion and the prongs are formed by two separate sheet metal pieces, which are obtained preferably by blanking and are then secured to each other, it is possible to properly vary both the material and the thickness of the two pieces so as to optimize the mass, the size and the mechanical strength of the shift fork. Moreover, the scrap produced during the blanking operation is greatly reduced in comparison with the single-piece configuration of the fork body.

Naturally, the principle of the invention remaining unchanged, the embodiments and the details of construction could widely vary from those described and illustrated purely by way of non-limiting example.

For example, the idea of providing overmoulded plastics bushes in the guide holes could be applied also to a fork having a conventional body, not formed as a single sheet metal piece produced by blanking and bending.

## Claims

1. Gear shift fork (10; 110) for a gearbox with discrete gear ratios, comprising
a body (12; 112) including a support portion (14; 114) arranged to be guided along a stationary rod (38, 40) of the gearbox and a pair of prongs (16; 116) which extend on opposite sides of the support portion (14; 114) and form at their distal ends respective finger-like portions adapted to act on a sliding coupling sleeve of the gearbox, and
an actuating nose (18; 118) fixed to the body (12; 112), by means of which a sliding movement along the stationary rod (38, 40) for the engagement of the desired gear can be imparted to the fork (10; 110);
**characterized in that** the support portion (14; 114) is shaped and arranged with respect to the prongs (16; 116) so as to allow two forks (10; 110) having identical bodies (12; 112) to be mounted on the same stationary rod (38, 40) so as to at least partially overlap in the sliding direction along the said rod.

2. Fork according to claim 1, wherein the two prongs (16; 116) have a plane of symmetry perpendicular to the stationary rod (38, 40) and the support portion (14; 114) is non-symmetrically arranged relative to the said plane of symmetry.

3. Fork according to any of the preceding claims, wherein the prongs (16; 116) are formed as plate-like elongated elements, which extend in length perpendicular to the sliding direction of the fork (10; 110) along the stationary rod (38, 40) and in width parallel to the said sliding direction.

4. Fork according to any of claims 1 to 3, wherein the support portion (14; 114) includes a central plate portion (19; 119) extending in the sliding direction of the fork (10; 110) along the stationary rod (38, 40) and a pair of ears (22; 122) arranged at a right angle to the central plate portion (19; 119) on the opposite sides thereof, the ears (22; 122) having respective coaxial guide holes (24; 124) adapted to guide the sliding movement of the fork (10; 110) along the stationary rod (38, 40).

5. Fork according to claim 4, wherein one of the ears (22; 122) is arranged farther from the prongs (16; 116) than the other ear.

6. Fork according to any of the preceding claims, wherein the body (12; 112) has a pair of slots (36; 136) for the mounting of the actuating nose (18; 118), arranged symmetrically relative to the finger-like ends of the prongs (16; 116).

7. Fork according to claim 6, wherein the slots (36; 136) are formed in the prongs (16; 116).

8. Fork according to any of claims 4 to 7, further comprising a pair of plastics bushes (26; 126), each fitted in a respective guide hole (24; 124).

9. Fork according to any of the preceding claims, wherein the finger-like ends of the prongs (16; 116) are provided with an antifriction plastics coating (34; 134).

10. Fork according to claim 8 or claim 9, wherein the bushes (26; 126) and/or the antifriction coatings (34; 134) of the finger-like ends of the prongs (16; 116) are obtained by plastics overmoulding.

11. Fork according to any of the preceding claims, wherein the actuating nose (18; 118) has a recess (37; 137) for engaging a control member and is provided with an antifriction plastics coating (35; 135) around the said recess.

12. Fork according to claim 11, wherein the antifriction plastics coating (35; 135) around the recess (37; 137) of the actuating nose (18; 118) is obtained by overmoulding.

13. Fork according to any of the preceding claims, wherein the support portion (14) and the prongs (16) are integrally formed by a single sheet metal body (12) obtained by blanking and bending.

14. Fork according to claim 4 and claim 13, wherein the support portion (14) further includes an appendage (20) which extends from the central plate portion (19) in the sliding direction of the fork (10), and wherein one of the ears (22) is formed at an end of the said appendage.

15. Fork according to claim 13 or claim 14, wherein the support portion (14) further includes a bridge-like portion (28) interposed between the central plate portion (19) and one of the prongs (16).

16. Fork according to claim 15, wherein the bridge-like portion (28) is welded (30) to a tab (32) extending laterally from one of the two ears (22), so as to stiffen the support portion (14).

17. Fork according to claim 14 and according to either claim 15 or claim 16, wherein the appendage (20) and the bridge-like portion (28) of the support portion (14) are shaped so as to allow two forks (10) having an identical body (12) to be mounted on the same stationary rod (38, 40) with the appendage (20) of one of them being arranged under or over the bridge-like portion (28) of the other.

18. Fork according to any of claims 1 to 12, wherein the support portion (114) is formed by a first sheet metal piece obtained by blanking and bending and the prongs (116) are formed by a second sheet metal piece obtained by blanking and bending, the two sheet metal pieces being firmly secured to each other.

19. Fork according to claim 18, wherein the said second piece includes a bridge-like portion (128) interposed between the two prongs (116) and wherein the support portion (114) is shaped so as to allow two forks (110) having an identical body (112) to be mounted on the same stationary rod (38, 40) with a length of the central plate portion (119) of a fork passing under or over the bridge-like portion (128) of the other fork.

20. Fork according to claim 19, wherein the bridge-like portion (128) is welded (130) to a tab (132) extending laterally from one of the two ears (122), so as to stiffen the support portion (114).

## Patentansprüche

1. Schaltgabel (10; 110) für ein Getriebe mit getrennten Gangstufen, umfassend:
einen Körper (12; 112), einschließlich eines Stützteils (14; 114), das dazu eingerichtet ist, entlang einer feststehenden Stange (38, 40) des Getriebes geführt zu werden, und eines Paars von Zinken (16; 116), die sich an gegenüberliegenden Seiten des Stützteils (14; 114) erstrecken und an ihren distalen Enden entsprechende fingerartige Abschnitte bilden, die dazu angepasst sind, auf eine Schiebekupplungsmuffe des Getriebes einzuwirken, und
eine am Körper (12; 112) befestigte Betätigungsnase (18; 118), mittels welcher eine gleitende Bewegung entlang der feststehenden Stange (38, 40) zum Einlegen des gewünschten Gangs der Gabel (10; 110) mitgeteilt werden kann;
**dadurch gekennzeichnet, dass** das Stützteil (14; 114) bezüglich der Zinken (16; 116) so geformt und angeordnet ist, um zu ermöglichen, dass die beiden Gabeln (10; 110), die identische Körper (12; 112) haben, an derselben feststehenden Stange (38, 40) zu montieren sind, um in der Gleitrichtung entlang dieser Stange zumindest teilweise zu überlappen.

2. Gabel gemäß Anspruch 1, wobei die beiden Zinken (16; 116) eine Symmetrieebene haben, die zur feststehenden Stange (38, 40) lotrecht ist, und das Stützteil (14; 114) relativ zu dieser Symmetrieebene asymmetrisch angeordnet ist.

3. Gabel gemäß einem der vorhergehenden Ansprüche, wobei die Zinken (16; 116) als plattenartige längliche Elemente gebildet sind, die sich in der Länge lotrecht zur Gleitrichtung der Gabel (10; 110) entlang der feststehenden Stange (38, 40) und in der Breite parallel zu dieser Gleitrichtung erstrecken.

4. Gabel gemäß einem der Ansprüche 1 bis 3, wobei das Stützteil (14; 114) einen zentralen Plattenabschnitt (19; 119), der sich in Gleitrichtung der Gabel (10; 110) entlang der feststehenden Stange (38, 40) erstreckt, und ein Paar von Ösen (22; 122) umfasst, die im rechten Winkel zum zentralen Plattenabschnitt (19; 119) an gegenüberliegenden Seiten davon angeordnet sind, wobei die Ösen (22; 122) jeweils koaxiale Führungslöcher (24; 124) haben, die dazu angepasst sind, die Gleitbewegung der Gabel (10; 110) entlang der feststehenden Stange (38, 40) zu lenken.

5. Gabel gemäß Anspruch 4, wobei eine der Ösen (22; 122) weiter entfernt von den Zinken (16; 116) angeordnet ist als die andere Öse.

6. Gabel gemäß einem der vorhergehenden Ansprüche, wobei der Körper (12; 112) ein Paar von Schlitzen (36; 136) zum Befestigen der Betätigungsnase (18; 118) aufweist, die symmetrisch bezüglich der fingerartigen Enden der Zinken (16; 116) angeordnet sind.

7. Gabel gemäß Anspruch 6, wobei die Schlitze (36; 136) in den Zinken (16; 116) gebildet sind.

8. Gabel gemäß einem der Ansprüche 4 bis 7, weiters umfassend ein Paar von Kunststoffbuchsen (26; 126), wobei jede in ein entsprechendes Führungsloch (24; 124) eingepasst ist.

9. Gabel gemäß einem der vorhergehenden Ansprüche, wobei die fingerartigen Enden der Zinken (16; 116) mit einer Antifriktionskunststoffschicht (34; 134) versehen sind.

10. Gabel gemäß Anspruch 8 oder Anspruch 9, wobei die Buchsen (26; 126) und/oder die Antifriktionsschichten (34; 134) der fingerartigen Enden der Zinken (16; 116) durch Kunststoff-Überformung erhalten werden.

11. Gabel gemäß einem der vorhergehenden Ansprüche, wobei die Betätigungsnase (18; 118) eine Vertiefung (37; 137) für den Eingriff eines Steuerglieds aufweist und mit einer Antifriktionskunststoffschicht (35; 135) um diese Vertiefung herum versehen ist.

12. Gabel gemäß Anspruch 11, wobei die Antifriktionskunststoffschicht (35; 135) um die Vertiefung (37; 137) der Betätigungsnase (18; 118) herum durch Überformung erhalten wird.

13. Gabel gemäß einem der vorhergehenden Ansprüche, wobei das Stützteil (14) und die Zinken (16) durch einen einzigen, durch Stanzen und Biegen erhaltenen Blechkörper (12) in einem Stück gebildet sind.

14. Gabel gemäß Anspruch 4 und Anspruch 13, wobei das Stützteil (14) weiters einen Fortsatz (20) umfasst, der sich vom zentralen Plattenabschnitt (19) in Gleitrichtung der Gabel (10) erstreckt, und wobei eine der Ösen (22) am Ende dieses Fortsatzes gebildet ist.

15. Gabel gemäß Anspruch 13 oder Anspruch 14, wobei das Stützteil (14) weiters einen brückenartigen Abschnitt (28) umfasst, der zwischen dem zentralen Plattenabschnitt (19) und einer der Zinken (16) eingefügt ist.

16. Gabel gemäß Anspruch 15, wobei der brückenartige Abschnitt (28) an einem Streifen (32) angeschweißt (30) ist, der sich von einer der beiden Ösen (22) seitwärts erstreckt, um das Stützteil (14) zu versteifen.

17. Gabel gemäß Anspruch 14 und entweder gemäß Anspruch 15 oder Anspruch 16, wobei der Fortsatz (20) und der brückenartige Abschnitt (28) des Stützteils (14) solcherart geformt sind, um das Anbringen von zwei Gabeln (10), die einen identischen Körper (12) haben, an derselben feststehenden Stange (38, 40) zu ermöglichen, wobei der Fortsatz (20) der einen unterhalb oder oberhalb des brückenartigen Abschnitts (28) der anderen angeordnet ist.

18. Gabel gemäß einem der Ansprüche 1 bis 12, wobei das Stützteil (114) durch ein erstes, durch Stanzen und Biegen erhaltenes Blechstück gebildet ist und die Zinken (116) durch ein zweites, durch Stanzen und Biegen erhaltenes Blechstück gebildet sind, wobei die beiden Blechstücke fest aneinander fixiert sind.

19. Gabel gemäß Anspruch 18, wobei das zweite Stück einen zwischen den beiden Zinken (116) eingefügten brückenartigen Abschnitt (128) umfasst und wobei das Stützteil (114) solcherart geformt ist, um das Anbringen von zwei Gabeln (110), die einen identischen Körper (112) haben, an derselben feststehenden Stange (38, 40) zu ermöglichen, wobei eine Länge des zentralen Plattenabschnitts (119) einer Gabel unterhalb oder oberhalb des brückenartigen Abschnitts (128) der anderen Gabel hindurchführt.

20. Gabel gemäß Anspruch 19, wobei der brückenartige Abschnitt (128) an einem Streifen (132) angeschweißt (130) ist, der sich von einer der beiden Ösen (122) seitwärts erstreckt, um das Stützteil (114) zu versteifen.

## Revendications

1. Fourchette de changement de vitesse (10 ; 110) pour une boîte de vitesse avec rapport d'engrenage distinct, comprenant :
un corps (12 ; 112) comprenant une partie de support (14 ; 114) agencée pour être guidée le long d'une tige fixe (38, 40) de la boîte de vitesse et une paire de dents (16 ; 116) qui s'étendent sur les côtés opposés de la partie de support (14 ; 114) et forment au niveau de leurs extrémités distales des parties en forme de doigt respectives adaptées pour agir sur un manchon de couplage coulissant de la boîte de vitesse, et
un nez d'actionnement (18 ; 118) fixé sur le corps (12 ; 112) au moyen duquel un mouvement coulissant le long de la tige fixe (38, 40) pour la mise en prise de la vitesse souhaitée peut être communiqué à la fourchette (10 ; 110) ;
**caractérisée en ce que** la partie de support (14 ; 114) est formée et agencée par rapport aux dents (16 ; 116) afin de permettre aux deux fourchettes (10 ; 110) d'avoir des corps identiques (12 ; 112) destinés à être montés sur la même tige fixe (38, 40) afin de chevaucher au moins partiellement dans la direction de coulissement le long de ladite tige.

2. Fourchette selon la revendication 1, dans laquelle les deux dents (16 ; 116) ont un plan de symétrie perpendiculaire à la tige fixe (38, 40) et la partie de support (14 ; 114) est agencée de manière non symétrique par rapport audit plan de symétrie.

3. Fourchette selon l'une quelconque des revendications précédentes, dans laquelle les dents (16 ; 116) sont formées comme des éléments allongés en forme de plaque qui s'étendent en longueur perpendiculairement à la direction de coulissement de la fourchette (10 ; 110) le long de la tige fixe (38, 40), et en largeur parallèlement à ladite direction de coulissement.

4. Fourchette selon l'une quelconque des revendications 1 à 3, dans laquelle la partie de support (14 ; 114) comprend une partie de plaque centrale (19 ; 119) s'étendant dans la direction de coulissement de la fourchette (10 ; 110) le long de la tige fixe (38, 40) et une paire d'oreilles (22 ; 122) agencées en angle droit par rapport à la partie de plaque centrale (19 ; 119) sur ses côtés opposés, les oreilles (22 ; 122) ayant des trous de guidage coaxiaux (24 ; 124) respectifs adaptés pour guider le mouvement coulissant de la fourchette (10 ; 110) le long de la tige fixe (38, 40).

5. Fourchette selon la revendication 4, dans laquelle l'une des oreilles (22 ; 122) est agencée de manière plus éloignée des dents (16 ; 116) que l'autre oreille.

6. Fourchette selon l'une quelconque des revendications précédentes, dans laquelle le corps (12 ; 112) a une paire de fentes (36 ; 136) pour le montage du nez d'actionnement (18 ; 118) agencées de manière symétrique par rapport aux extrémités en forme de doigt des dents (16 ; 116).

7. Fourchette selon la revendication 6, dans laquelle les fentes (36 ; 136) sont formées dans les dents (16 ; 116).

8. Fourchette selon l'une quelconque des revendications 4 à 7, comprenant en outre une paire de douilles en plastique (26 ; 126), chacune montée dans un trou de guidage (24 ; 124) respectif.

9. Fourchette selon l'une quelconque des revendications précédentes, dans laquelle les extrémités en forme de doigt des dents (16 ; 116) sont prévues avec un revêtement en plastique anti-frottement (34 ; 134).

10. Fourchette selon la revendication 8 ou la revendication 9, dans laquelle les douilles (26 ; 126) et/ou les revêtements anti-frottement (34 ; 134) des extrémités en forme de doigt des dents (16 ; 116) sont obtenus en surmoulant du plastique.

11. Fourchette selon l'une quelconque des revendications précédentes, dans laquelle le nez d'actionnement (18 ; 118) a un évidement (37; 137) pour mettre en prise un élément de commande et est prévu avec un revêtement en plastique anti-frottement (35 ; 135) autour dudit évidement.

12. Fourchette selon la revendication 11, dans laquelle le revêtement en plastique anti-frottement (35 ; 135) autour de l'évidement (37; 137) du nez d'actionnement (18 ; 118) est obtenu par surmoulage.

13. Fourchette selon l'une quelconque des revendications précédentes, dans laquelle la partie de support (14) et les dents (16) sont formées de manière solidaire par un corps de tôle unique (12) obtenu par découpage à la presse et flexion.

14. Fourchette selon la revendication 4 et la revendication 13, dans laquelle la partie de support (14) comprend en outre un appendice (20) qui s'étend à partir de la partie de plaque centrale (19) dans une direction de coulissement de la fourchette (10), et dans laquelle l'une des oreilles (22) est formée au niveau d'une extrémité dudit appendice.

15. Fourchette selon la revendication 13 ou la revendication 14, dans laquelle la partie de support (14) comprend en outre une partie en forme de pont (28) interposée entre la partie de plaque centrale (19) et l'une des dents (16).

16. Fourchette selon la revendication 15, dans laquelle la partie en forme de pont (28) est soudée (30) à une languette (32) s'étendant latéralement à partir de l'une des deux oreilles (22) afin de rigidifier la partie de support (14).

17. Fourchette selon la revendication 14 et selon la revendication 15 ou 16, dans laquelle l'appendice (20) et la partie en forme de pont (28) de la partie de support (14) sont formés afin de permettre à deux fourchettes (10) ayant un corps identique (12) d'être montées sur la même tige fixe (38, 40) avec l'appendice (20) de l'une d'entre elles qui est agencée au-dessous ou au-dessus de la partie en forme de pont (28) de l'autre.

18. Fourchette selon l'une quelconque des revendications 1 à 12, dans laquelle la partie de support (114) est formée par un premier morceau de tôle obtenu par découpage à la presse et flexion et les dents (116) sont formées avec un second morceau de tôle obtenu par découpage à la presse et flexion, les deux morceaux de tôle étant fixés fermement l'un à l'autre.

19. Fourchette selon la revendication 18, dans laquelle ledit second morceau comprend une partie en forme de pont (128) interposée entre les deux dents (116) et dans laquelle la partie de support (114) est formée afin de permettre à deux fourchettes (110) ayant un corps identique (112) d'être montées sur la même tige fixe (38, 40) avec une longueur de la partie de plaque centrale (119) d'une fourchette passant au-dessous ou au-dessus de la partie en forme de pont (128) de l'autre fourchette.

20. Fourchette selon la revendication 19, dans laquelle la partie en forme de pont (128) est soudée (130) à une languette (132) s'étendant latéralement à partir de l'une des deux oreilles (122), afin de rigidifier la partie de support (114).
